(19) Europäisches Patentamt / European Patent Office / Office européen des brevets

(11) **EP 3 239 391 B1**

(12) **EUROPEAN PATENT SPECIFICATION**

(45) Date of publication and mention
of the grant of the patent:
**23.10.2019 Bulletin 2019/43**

(21) Application number: **15873035.8**

(22) Date of filing: **22.12.2015**

(51) Int Cl.:
*D06M 10/00* *(2006.01)*     *B29B 17/02* *(2006.01)*
*C25D 11/02* *(2006.01)*     *D01F 11/16* *(2006.01)*
*D06M 10/06* *(2006.01)*     *D06M 10/08* *(2006.01)*
*D06M 10/04* *(2006.01)*     *D01F 9/22* *(2006.01)*
*D01F 9/28* *(2006.01)*      *D01F 11/14* *(2006.01)*
*D01F 9/26* *(2006.01)*      *C08K 9/08* *(2006.01)*
*B29B 17/04* *(2006.01)*     *D06M 101/40* *(2006.01)*

(86) International application number:
**PCT/JP2015/085760**

(87) International publication number:
**WO 2016/104467 (30.06.2016 Gazette 2016/26)**

(54) **CARBON-FIBER-REINFORCED RESIN COMPOSITION**

KOHLENSTOFFFASERVERSTÄRKTE HARZZUSAMMENSETZUNG

COMPOSITION DE RÉSINE RENFORCÉE DE FIBRES DE CARBONE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.12.2014 JP 2014264788**

(43) Date of publication of application:
**01.11.2017 Bulletin 2017/44**

(73) Proprietor: **Ijuin, Noriaki**
**Hachinohe-shi, Aomori 031-0031 (JP)**

(72) Inventor: **Ijuin, Noriaki**
**Hachinohe-shi, Aomori 031-0031 (JP)**

(74) Representative: **Colombo, Stefano Paolo et al**
**Marchi & Partners S.r.l.**
**Via Vittor Pisani, 13**
**20124 Milano (IT)**

(56) References cited:
**GB-A- 2 159 178         JP-A- H0 733 904**
**JP-A- H1 193 078        JP-A- S6 420 377**
**JP-A- H07 279 040       JP-A- S58 132 126**
**JP-A- 2013 249 386      US-A- 4 401 533**
**US-A- 5 462 799**

• **HITOMI HATANAKA ET AL.: 'Tokushu Kagakuhin Recycle no Saishin Doko Tanso Sen'i Kyoka Plastic no Recycle Denkai Sankaho to Recycle Business Model' KAGAKU KEIZAI vol. 61, no. 8, 01 July 2014, pages 44 - 50, XP009504167**
• **HITOMI HATANAKA ET AL.: 'Denkai Sankaho o Mochiita Tanso Sen'i Fukugo Zairyo kara no Tanso Sen'i no Kaishu' THE SURFACE FINISHING SOCIETY OF JAPAN DAI 130 KAI KOEN TAIKAI YOSHISHU 10 September 2014, page 165, XP009504181**

**Description**

[Technical Field]

The present invention relates to a carbon-fiber-reinforced resin (CFRP) composition. A method of preparation of the carbon fiber is also disclosed.

[Background Art]

Carbon fibers have been attracting attention as the next generation of lightweight materials and are utilized as a carbon-fiber-reinforced composite material obtained by combining carbon fibers with resins or carbon by means of binders. Different types of carbon-fiber-reinforced composite materials include C/C composites (Carbon Fiber-Reinforced Carbon Composite materials) in which carbon fibers and carbon (mainly coke) are combined, CFRP (Carbon Fiber-Reinforced Plastics) in which carbon fibers and resins (mainly thermosetting resins) are combined and CFRC (Carbon Fiber-Reinforced Cement) in which carbon fibers and cement are combined. Because of the light weight and high strength thereof, carbon-fiber-reinforced composite materials are used for aircraft, automobiles, the space field and the like. Carbon fibers are now utilized earnestly in the fields related to automobiles and aircraft as the use thereof leads to an improvement of fuel efficiency and a reduction of environmental burdens, and thus it is believed that the market of carbon fibers is going to expand. However, because of the annual production scale of a few tens of thousands of tons, a problem of waste disposal of used composite materials has arisen. Because of this, various recycling techniques for isolating and recovering carbon fibers from carbon-fiber-reinforced composite materials have been studied.

Carbon-fiber-reinforced composite materials are extremely stable, and because of the stability thereof, the decomposition and recycling thereof is difficult. Despite an increasing demand for carbon-fiber-reinforced composite materials every year, a problem is that the recycling technique of waste materials has not been established. Enablement of recycling of carbon fibers in carbon-fiber-reinforced composite materials at low cost allows potential utilization of carbon fibers in various fields for which use thereof has not been realized because of high raw material costs. In addition, use of carbon-fiber-reinforced composite materials with low environmental burdens in various fields may contribute to the solution of environmental issues.

JP2013-249386 A discloses a process for recycling carbon fibers, and the use of these fibers in a resin composition. US 5 462 799 A discloses anodized and sized carbon fibers. US4 401 533 A and GB 2 159 178 A disclose anodized fibers which present improved adhesion when used in composites. JP H11 930078 A and JPH07 279040 A disclose the production of sized carbon fibers having improved adhesive strength to composites. A main recycling method of isolation and recovery of carbon fibers from carbon-fiber-reinforced composite materials is thermal decomposition (PTL 1). In addition to the thermal decomposition, a supercritical fluid method, a subcritical fluid method, depolymerization under ordinary pressure (PTL 2) and the like have been studied. However, all methods are far from practical application because of high recycling costs, insufficient performance of resulting carbon fibers and the like.

Among the recycling methods, PTL 3 proposes a method of electrolysis (anodization) of a carbon-fiber-reinforced composite material in an acidic or alkaline aqueous solution. In the method, carbon fibers are detached from a matrix resin by electrolysis and only fibrous carbon fibers are isolated and recovered. The method is energy saving, low cost and resulting carbon fibers also have practically sufficient fiber length, and thus the recycling method was unique and novel.

[Citation List]

[Patent Literature]

[PTL 1] Japanese Patent Application Laid-open No. H06-298993
[PTL 2] Japanese Patent Application Laid-open No. 2005-255899
[PTL 3] Japanese Patent Application Laid-open No. 2013-249386
[PTL 4] Japanese Patent Application Laid-open No. H04-361619
[PTL 5] Japanese Patent Application Laid-open No. 2013-1638889

[Summary of Invention]

[Technical Problem]

However, an epoxy resin composition containing carbon fibers obtained by the method disclosed in PTL 3 resulted in the same strength as a composition without the carbon fibers and lower strength than a sample which underwent sizing (PTL 3, Table 15). The inventors point out that the cause was due to insufficient interface adhesion between carbon fibers and the matrix resin.

Although PTL 3 provides an excellent recycling method of isolation and recovery of carbon fibers from carbon-fiber-reinforced composite materials, the invention disclosed therein had a problem of practically insufficient strength of resulting carbon fibers which was not as high as the original strength.

In order to address insufficient mechanical characteristics, a manner is taken in which, for the purpose of increasing interface adhesion between carbon fibers and a matrix epoxy resin, the carbon fibers are subjected to oxidation treatment such as gas-phase oxidation or liquid-phase oxidation to introduce an oxygen-containing functional group on the surface of carbon fibers. As an example, PTL 4 suggests a method for increasing interlayer shear strength, which is an index of interface adhesion, by subjecting carbon fibers (virgin carbon fibers) prepared from polyester or pitch-containing materials to electrolytic treatment. PTL 5 indicates that only the oxidation treatment is insufficient to obtain enough interface adhesion that meets recent requirements for composite materials and suggests a treatment using a specific sizing agent.

Both the electrolysis treatment disclosed in PTL 4 and the treatment with the sizing agent disclosed in PTL 5 intend to treat virgin carbon fibers independently prepared in order to increase adhesion thereof with an epoxy resin. Meanwhile, in the electrolytic treatment of the present invention, it is necessary to use a carbon-fiber-reinforced composite material as a starting material and isolate and recover carbon fibers while maintaining or improving properties of the recovered carbon fibers. Without needing to see the example such as in PTL 3, carbon fibers recovered by a recycling method may have decreased mechanical strength and the like due to the treatment undergone during the recycling process. In order to fulfil both the recovery rate and the performance of fibers, there is a need for an invention different from that in PTL 4.

Carbon fibers recovered from a carbon-fiber-reinforced composite material by a recycling method are generally prepared at lower cost than virgin carbon fibers, and thus are expected to be applied to various fields such as public welfare which are other than the fields for which high strength is required such as aircraft. It is estimated that, while applications such as aircraft, sporting goods and windmill vanes require thermosetting resin composite materials mainly containing an epoxy resin as a matrix, the fields with high future growth potential are carbon-fiber-reinforced thermoplastic resins (CFRTP) containing, as a matrix, a thermoplastic resin which has a short molding cycle and is inexpensive.

PTL 3 proposes a method of which energy cost, which accounts for a majority of production cost, is as inexpensive as 1/6 to 1/8 of other recycling methods such as thermal decomposition. Therefore, if it is possible to configure carbon fibers recovered by the method so as to have mechanical strength and the like equivalent to or higher than those of virgin carbon fibers, it is possible to provide an inexpensive and highly practical carbon-fiber-reinforced thermoplastic resin.

Thus, an object of the present invention is to provide carbon fibers recovered by anodization of a carbon-fiber-reinforced composite material, which have excellent interface adhesion with a thermoplastic resin and/or a thermosetting resin and have excellent mechanical characteristics, a method of preparation of the same and a carbon-fiber-reinforced resin composition containing the same.

[Summary of Invention]

[Solution to Problem]

The inventor of the present invention conducted extensive studies and found that, when carbon fibers are obtained by electrochemically treating (anodization of) a carbon-fiber-reinforced composite material, imparting a specific amount of functional group on the surface of carbon fibers under specific preparation conditions increases interface adhesion between the recovered carbon fibers and a thermoplastic resin and/or a thermosetting resin, resulting in carbon fibers having excellent mechanical characteristics and a carbon-fiber-reinforced resin composition. The inventor of the present invention thus completed the present invention.

The present disclosure is as follows:

[1] A carbon fiber recovered from a carbon-fiber-reinforced composite material by anodization and exhibiting 0.3 mmol/g or more of total amount of acidic functional groups on a carbon fiber surface measured by Boehm titration method or 0.02 mmol/g or more of amount of carboxyl groups on a carbon fiber surface measured by Boehm titration method.

[2] A method of preparation of a carbon fiber, including
a step of heat-treating a carbon-fiber-reinforced composite material to thermally decompose at least a part of a resin component contained in the carbon-fiber-reinforced composite material; and a step of anodizing the thermally decomposed material to obtain a fibrous carbon fiber;
wherein the decomposition of the resin component in the heat-treating step and the anodization is accomplished until 85% or more of the resin component is decomposed; and
the anodization is conducted under the conditions of 10 V or less of applied voltage and 0.5 A/cm$^2$ or less of average current density to obtain a fibrous carbon fiber.

[3] The method according to [2], wherein the carbon-fiber-reinforced composite material is carbon fiber reinforced plastics (CFRP).

[4] The present invention is as follows : a carbon-fiber-reinforced resin composition including (A) a carbon fiber that is the carbon fiber according to [1] or the carbon fiber prepared by the method according to [2] or [3], the carbon fiber not containing a sizing agent, and exhibiting 0.3 mmol/g or more of total amount of acidic functional groups on the carbon fiber surface measured by Boehm titration method or 0.02 mmol/g or more of amount of carboxyl groups on a carbon fiber surface measured by Boehm tittration method, and (B) a thermoplastic resin and/or a thermosetting resin;
wherein the resin composition includes 5 to 95 mass% of (A) the carbon fiber and 5 to 95 mass% of (B) the thermoplastic resin and/or a thermosetting resin on the basis of a total amount of (A) the carbon fiber and (B) the thermoplastic resin and/or the thermosetting resin as 100 mass%.

[5] The carbon-fiber-reinforced resin composition according to [4], wherein the thermoplastic resin is at least one selected from the group consisting of a styrene resin, a polyamide resin, a polycarbonate resin, a polyester resin, a polyphenylene ether resin, a polyphenylene sulfide resin, a polyacetal resin, an acrylic resin, a vinyl chloride resin and a polyolefin resin.

[6] The carbon-fiber-reinforced resin composition according to [4], wherein the thermosetting resin is at least one selected from the group consisting of an epoxy resin, a phenol resin, a melamine resin, a urea resin, a diallyl phthalate resin and an unsaturated polyester resin.

[Advantageous Effects of Invention]

The present invention can provide carbon fibers recovered from an unprecedented and novel carbon fiber recycling method and a resin composition containing the carbon fibers, thereby having unprecedented excellent mechanical characteristics.

[Brief Description of Drawings]

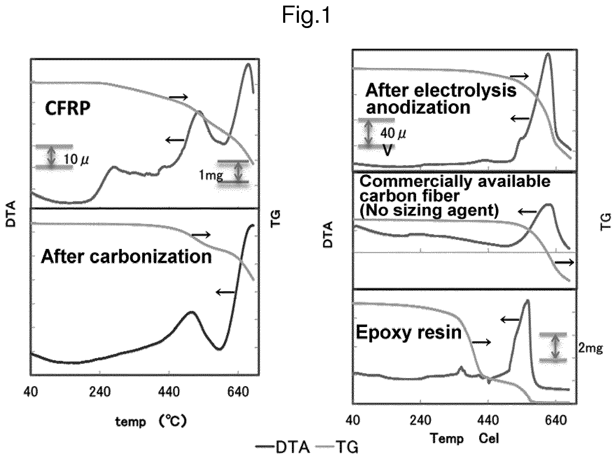

Fig. 1 shows thermal properties (thermogravimetric reduction-differential thermal analysis; TG-DTA) of CFRP.

[Description of Embodiments]

Embodiments for practicing the carbon fibers and the carbon-fiber-reinforced resin composition obtained with the carbon fibers of the present invention are more specifically described hereinbelow.

<Carbon fibers>

The carbon fiber used in the present invention exhibits 0.3 mmol/g or more of total amount of acidic functional groups on a carbon fiber surface measured by Boehm titration method or 0.02 mmol/g or more of amount of carboxyl groups on a carbon fiber surface measured by Boehm titration method. The carbon fiber of the present invention preferably exhibits 0.3 mmol/g or more and 0.5 mmol/g or less of the total amount of acidic functional groups on a carbon fiber surface. The carbon fiber of the present invention preferably exhibits 0.02 mmol/g or more and 1.10 mmol/g or less of the amount of carboxyl groups on a carbon fiber surface. The carbon fiber of the present invention more preferably exhibits 0.3 mmol/g or more and 0.5 mmol/g or less of the total amount of acidic functional groups on a carbon fiber surface and 0.02 mmol/g or more and 1.10 mmol/g or less of the amount of carboxyl groups on a carbon fiber surface. The methods of determination of the total amount of acidic functional groups on a carbon fiber surface measured by Boehm titration method and the amount of carboxyl groups on a carbon fiber surface measured by Boehm titration method are described in Examples. Examples of the acidic functional groups on a carbon fiber surface measured by Boehm titration method include a carboxyl group, a carbonyl group, a phenolic hydroxy group and the like.

The carbon fibers according to the present invention are, as described hereinbelow, obtained by anodizing a carbon-fiber-reinforced composite material in an electrolytic solution, thereby decomposing at least some carbon fibers contained in the carbon-fiber-reinforced composite material to isolate and recover fibrous carbon fibers. The method of preparation of the carbon fiber of the present invention is described hereinbelow.

<Method of preparation of carbon fibers>

The method of preparation of a carbon fiber used in the present invention includes a step of heat-treating a carbon-fiber-reinforced composite material to thermally decompose at least a part of a resin component contained in the carbon-fiber-reinforced composite material and a step of anodizing the thermally decomposed material to obtain a fibrous carbon fiber, wherein the decomposition of the resin component in the heat-treating step and the anodization is accomplished until 85% or more of the resin component is decomposed and the anodization is conducted under the conditions of 10 V or less of applied voltage and 0.5 A/cm$^2$ or less of average current density to obtain a fibrous carbon fiber.

The carbon-fiber-reinforced composite material may be, but is not limited to, CFRP (Carbon Fiber Reinforced Plastics) in which carbon fibers and a resin (mainly a thermosetting resin) are combined. The method of the present invention is suitable for recovery of carbon fibers from CFRP.

Because CFRP is used as the carbon-fiber-reinforced composite material in the present invention, CFRP is heat-treated in an oxygen-containing atmosphere prior to anodization. Due to this, decomposition to fibrous substances by anodization is promoted. The heat treatment allows carbonization of a part of the matrix resin, imparts electric conductivity to CFRP and enables electrolysis of CFRP. The heat treatment is an important step which has influence on the recovery rate and mechanical characteristics of the recovered carbon fibers. From this point of view, thermal decomposition in the heat-treating step is conducted until 30% or more of the resin component is thermally decomposed. Preferably, the thermal decomposition is conducted until 50% or more of the resin component is thermally decomposed. The thermal decomposition may be conducted until 85% or more or 90% or more is decomposed. An increased thermal decomposition rate of the resin component increases the recovery rate of carbon fibers after anodization, decreases the residual resin on the fiber surface and improves dispersibility of fibers in water. However, in view of energy efficiency, it is preferable that the thermal decomposition temperature is not extremely high or the thermal decomposition time is not extremely long.

The heat treatment conditions, i.e. the heating temperature and the heating time are determined by referring to the thermal properties (thermogravimetric reduction-differential thermal analysis; TG-DTA) of CFRP shown in Fig. 1. According to the TG curve of an epoxy resin in Fig. 1, the weight of the epoxy resin starts decreasing (it is believed to be due to thermal decomposition) at a temperature of just over 300°C and stops decreasing at around 440°C. At a temperature of over 400°C, the weight decrease sharply progresses. According to the DTA curve of CFRP in Fig. 1, a thermal decomposition peak of carbon fibers is observed at just over 640°C. Therefore, heating may be conducted at a temperature in the range of 300°C to 700°C, preferably in the range of 350°C to 650°C and still more preferably in the range of 400°C to 600°C. When the temperature is 300°C or lower, the matrix resin cannot be sufficiently carbonized and thus sufficient conductivity cannot be imparted to CFRP and an insufficient recovery rate may result. When the temperature is 700°C or higher, carbon fibers are decomposed and impaired, resulting in failure of recovery of high-performance carbon fibers.

When heat treatment is conducted at 300°C to 400°C, only a part of the epoxy resin, which is a matrix resin, can be carbonized, and thus uniform conductivity cannot be obtained. Therefore, under a constant potential direct current, it is required to decompose CFRP under conditions of an applied voltage of as high as above 6 V and a direct current of as high as above 0.5 A. However, when such high applied voltage and current are applied also to carbon fibers, high-performance carbon fibers may not be obtained ultimately. Therefore, for the heating temperature of 300°C to 400°C, the heating time is increased to improve the carbonization rate (= thermal decomposition rate) of the epoxy resin.

With regard to the heating time, it is appropriate to heat until when pyroconductivity of the epoxy resin, which is a matrix resin, is obtained. Heating is conducted between 10 minutes and 10 hours, preferably 20 minutes to 7 hours and still more preferably 0.5 hours to 5 hours. In order to increase the recovery rate of carbon fibers and obtain high-performance carbon fibers at a heating temperature of 300°C to 400°C among the above range of heating temperature, the heating time of 2 hours at 350°C and 1.5 hours or more at 400°C is required. At a heating temperature above 600°C, the heating time is preferably 1.0 hours or less.

The oxygen-containing functional groups cannot be introduced at a sufficient amount by heat treatment only. In order to obtain a sufficient amount of functional groups, the anodization step is required. In the anodization step, the epoxy resin, which is a matrix, is embrittled and at the same time, functional groups are introduced to the carbon fiber surface. It is assumed that atomic oxygen generated at the anode and having high oxidizing power localizes at the interface between the matrix resin and carbon fibers to oxidize the carbon fiber surface and form functional groups while detaching the matrix resin from carbon fibers. At the same time, atomic oxygen damages the carbon fibers. Therefore, by sufficiently imparting conductivity to CFRP in the previous heating step, the burdens in the anodization step are reduced, and it is required to obtain the conditions of the anodization step such that carbon fibers are not damaged.

The carbon-fiber-reinforced composite material is decomposed into fibrous substances by anodization. The anodization is conducted under the conditions of 10 V or less of applied voltage and 0.5 A/cm$^2$ or less of average current density. The decomposition by anodization is conducted until 85% or more, preferably 90% or more of the resin component is decomposed in total from the decomposition in the heat-treating step.

In anodization, an electrolytic solution may be used which is, for example, an acidic aqueous solution or an alkaline aqueous solution. For the acidic aqueous solution, an acid which may be, for example, an inorganic acid, an organic acid or a mixture thereof is used. Examples of the inorganic acid include sulfuric acid, hydrochloric acid, nitric acid, phosphoric acid and the like, among which sulfuric acid is preferred because gaseous oxygen is generated during anodization of the carbon-fiber-reinforced composite material. Examples of the organic acid include formic acid, acetic acid, citric acid, oxalic acid and the like. For the alkaline aqueous solution, an alkali is used which may be, for example, a hydroxide, a carbonate salt, a hydrogen carbonate salt and the like of an alkali metal, a hydroxide, a carbonate salt, a hydrogen carbonate salt and the like of an alkaline earth metal, an amine compound and the like. Examples of the alkali metal include lithium, sodium, potassium, rubidium, cesium and the like. Examples of the alkaline earth metal include beryllium, magnesium, calcium, strontium, barium and the like. Examples of the amine compound include dimethylamine, diethylamine and the like. Given the availability, solubility to water and the like, sodium hydroxide or potassium hydroxide is preferably used.

The acid concentration of an acidic aqueous solution serving as the electrolytic solution may be appropriately selected by taking into account the type of the acid, the type of the carbon-fiber-reinforced composite material, the temperature of the electrolytic solution, the period of electrolysis, the easiness of decomposition of the carbon-fiber-reinforced composite material into fibrous substances by anodization and the like. The acid concentration may be, for example, in the range of 0.01 to 10 M and preferably in the range of 0.1 to 1 M. The alkali concentration in an alkaline aqueous solution serving as the electrolytic solution may be appropriately selected by taking into account the type of the alkaline, the type of the carbon-fiber-reinforced composite material, the temperature of the electrolytic solution, the easiness of decomposition of the carbon-fiber-reinforced composite material into fibrous substances by anodization and the like. The alkaline concentration may be, for example, in the range of 0.01 to 10 M and preferably in the range of 0.1 to 1 M.

The electrolytic solution may contain, in addition to the acid or alkaline, an additive. The additive may be, for example, effective for promoting decomposition of the carbon-fiber-reinforced composite material into fibrous substances by anodization. Examples of the additive include alcohols (monoalcohols, polyhydric alcohols), salts (such as metal chlorides) and the like. Examples of monoalcohols include methanol, ethanol, propanol, butanol, hexanol, heptanol and the like. Examples of polyhydric alcohols include glycol compounds (such as ethylene glycol and propylene glycol) and diols (such as 1,3-propanediol and 1,4-butanediol). Examples of salts include alkali metal salts (such as KCl and NaCl). KCl is particularly preferred. When, for example, the electrolytic solution is an alkaline aqueous solution, addition of the polyhydric alcohol or salt increases the speed of decomposition to fibrous substances. Two or more additives may be used in combination. The amount of the additive added to the electrolytic solution may be appropriately selected according to the type of the additive, the type of the electrolyte, the type of the carbon-fiber-reinforced composite material to be processed. The amount may be, for example, in the range of 0.01 to 10 M and preferably in the range of 0.1 to 1 M. However, it is not intended that the amount is limited to the above range and the range serves only as a guide.

Anodization is conducted by disposing the carbon-fiber-reinforced composite material to be decomposed and a counter electrode in an electrolysis vessel containing the electrolytic solution and applying voltage so that the carbon-fiber-reinforced composite material and the counter electrode serve as an anode and a cathode, respectively. The counter electrode serving as a cathode may be formed of an inert material in a cathode reaction and may be, for example, a copper electrode, a titanium electrode, a platinum electrode or the like or SUS may be used as the electrode. Voltage may be applied under constant potential or constant current or in a manner such that the potential or current varies periodically such as pulse potential. Alternatively, different electrolysis manners may be used in combination.

In case of the constant-potential and constant-current electrolysis, the potential and the current may be set by considering the type and status of the carbon-fiber-reinforced composite material, the type of the electrolytic solution and the like. It is preferable that the conditions do not adversely affect the strength of carbon fibers in CFRP and allow decomposition of only the epoxy resin. When the appropriate heat treatment as described above is conducted, anodization may be conducted at 10 V or less, preferably 8 V or less and more preferably 6 V or less of voltage. Namely, in CFRP having sufficient conductivity imparted thereto, the epoxy resin is sufficiently embrittled at 10 V or less, preferably 8 V or less and more preferably 6 V or less of voltage, so that only fibrous carbon fibers can be isolated and recovered in the later stage at a high yield and the resulting carbon fibers have a desired amount of functional groups without degradation. When voltage of above 10 V is applied to CFRP, the recovered carbon fibers have decreased mechanical strength. It is generally known that this is because organic substances are oxidized or reduced when electrolysis is carried out under extreme conditions, and it is believed, also in the present invention, that the voltage has some effects such as cleavage of molecular bonds of carbon fibers and reduction of crystallinity accompanying therewith.

When the appropriate heat treatment as described above is conducted, anodization may be conducted at 0.5 A or less of average current density. Namely, in CFRP having sufficient conductivity imparted thereto, the epoxy resin is sufficiently embrittled at 0.5 A or less of average current density, so that only fibrous carbon fibers can be isolated and recovered in the later stage at a high yield and the resulting carbon fibers have a desired amount of functional groups without degradation. Similar to those described above for the voltage, an excess amount of current added to CFRP adversely affects carbon fibers and causes a reduction in physical properties.

The temperature of the electrolytic solution during anodization may be, without particular limitation, normal temperature (such as 10°C to 30°C). Alternatively, when the temperature of the electrolytic solution increases due to electrolysis, the electrolytic solution may be cooled. Alternatively, for the purpose of increasing the reaction rate, the temperature of the electrolytic solution may be set to be higher than normal temperature (heating).

The anodization may be carried out until at least a part of the carbon-fiber-reinforced composite material becomes fibrous carbon fibers close to original fibers. The degree of the fibrous state may be appropriately selected by taking into account the application of the recovered carbon fibers and the like.

CFRP after anodization is disintegrated by, for example, press, screw press or high-speed agitation. The matrix resin is thereafter easily destroyed by shear force during disintegration and the following appropriate separation treatment may give only carbon fibers. The resulting carbon fibers may undergo neutralization, washing or drying. The carbon fibers may undergo washing with water and drying without neutralization.

<Carbon-fiber-reinforced resin composition>

The carbon fiber prepared according to the method disclosed above may be used as it is for a raw material of carbon-fiber-reinforced composite materials. However, the recovered carbon fibers generally are bulky after disintegration and drying and poorly bound, and thus, in order to reduce the bulkiness for some intended purposes, a binder (also referred to as a sizing agent) which is usually used in common methods of preparation of a carbon fiber may be used. Polyurethane, epoxy, epoxy urethane, modified acrylic, modified olefin, phenolic, specialty resin and the like binders may be used according to the type of matrix resin with which the recycled carbon fibers are mixed.

The recovered carbon fiber obtained according to the present disclosure has a hydrophilic functional group such as a carboxyl group and a hydroxy group on the surface thereof. The inventor of the present invention found that the method of preparation of the present disclosure as described above can give a recovered carbon fiber of the present disclosure having a predetermined amount of surface functional groups. Further, the inventor of the present invention found that the carbon-fiber-reinforced resin composition of the present disclosure which is obtained with the recovered carbon fiber of the present disclosure having a predetermined amount of surface functional groups has practically sufficient mechanical strength and serves as an excellent constructional material. Namely, it was found that by mixing the recovered carbon fiber of the present disclosure with a thermoplastic resin and/or thermosetting resin, a carbon-fiber-reinforced resin composition (CFRTP) having excellent mechanical strength and practical properties and suitable for various applications and as constructional materials can be obtained.

A preferable aspect of the carbon-fiber-reinforced resin composition of the present invention is a carbon-fiber-reinforced thermoplastic resin composition. The carbon-fiber-reinforced thermoplastic resin composition may be such that the thermoplastic resin is at least one thermoplastic resin selected from the group consisting of a styrene resin, a polyamide resin, a polycarbonate resin, a polyester resin, a polyphenylene ether resin, a polyphenylene sulfide resin, a polyacetal resin, an acrylic resin, a vinyl chloride resin and a polypropylene resin and the carbon-fiber-reinforced thermoplastic resin composition comprises a recovered carbon fiber exhibiting 0.3 mmol/g or more of the total amount of acidic functional groups on a carbon fiber surface and/or 0.02 mmol/g or more of the amount of carboxyl groups on a carbon fiber surface measured by Boehm titration method.

Examples of the styrene resin include homopolymers or copolymers of styrene, $\alpha$-methylstyrene and the like, and copolymers of styrene, $\alpha$-methylstyrene and the like with an unsaturated monomer copolymerizable therewith. Specifically, examples include general purpose polystyrene (GPPS), high impact polystyrene (HIPS), heat resistant polystyrene (such as $\alpha$-methylstyrene polymers and copolymers), acrylonitrile-butadiene-styrene copolymers (ABS), acrylonitrile-butadiene-styrene-$\alpha$-methylstyrene copolymers (a-methylstyrene heat resistant ABS), acrylonitrile-butadiene-styrene-phenylmaleimide copolymers (phenylmaleimide heat resistant ABS), acrylonitrile-styrene copolymers (AS), acrylonitrile-chlorinated polystyrene-styrene copolymers (ACS), acrylonitrile-ethylene/propylene rubber-styrene copolymers (AES), acrylic rubber-acrylonitrile-styrene copolymers (AAS), syndiotactic polystyrene (SPS) and the like. The styrene resin may be obtained by blending polymers.

The polyamide resin is not particularly limited as far as the resin has an amide bond in repeating structure of the polymer. The polyamide resin is preferably a thermoplastic polyamide resin and examples thereof include homopolyamides and copolyamides obtained by polymerizing lactam, aminocarboxylic acid and/or diamine and a monomer such as dicarboxylic acid, mixtures of the homopolyamides and copolyamides.

Specific examples include polycaproamide (nylon 6), polyhexamethylene adipamide (nylon 66), polytetramethylene adipamide (nylon 46), polyhexamethylene sebacamide (nylon 610), polyhexamethylene dodecamide (nylon 612), polyundecamethylene adipamide (nylon 116), polybis(4-aminocyclohexyl)methane dodecamide (nylon PACM12), polybis(3-methyl-4-aminocyclohexyl)methane dodecamide (nylon dimethyl PACM12), polynonamethylene terephthalamide (nylon 9T), polydecamethylene terephthalamide (nylon 10T), polyundecamethylene terephthalamide (nylon 11T), polyundecamethylene hexahydroterephthalamide (nylon 11T (H)), polyundecamide (nylon 11), polydodecamide (nylon 12), polytrimethylhexamethylene terephthalamide (nylon TMDT), polyhexamethylene terephthalamide (nylon 6T), polyhexamethylene isophthalamide (nylon 61), polymeta-xylylene adipamide (nylon MXD6), copolymers and mixtures of the foregoing and the like. Among others, in view of moldability and surface appearance, nylon 6, nylon 66, nylon MXD6, nylon 9T, nylon 10T and copolymeric polyamides thereof are preferred, nylon 9T, nylon 10T and nylon MXD6 are more preferred and nylon 9T is particularly preferred. It is also practically suitable to used mixtures of the thermoplastic polyamide resins according to the required properties such as impact resistance and molding workability.

Examples of the polycarbonate resin include 4,4'-dihydroxy diaryl alkane polycarbonates. Specific examples include bisphenol A polycarbonate (PC), modified bisphenol A polycarbonate, flame-retardant bisphenol A polycarbonate and the like.

Examples of the polyester resin include polycondensation products of an aromatic dicarboxylic acid and an alkylene glycol such as ethylene glycol, propylene glycol and butylene glycol. Specific examples include polyethylene terephthalate (PET), polypropylene terephthalate (PPT) and polybutylene terephthalate (PBT) and the like.

Examples of the polyphenylene ether resin (PPE) include homopolymers such as poly(2,6-dimethyl-1,4-phenylene)ether and poly(2-methyl-6-ethyl-1,4-phenylene)ether and products obtained by modifying the homopolymers with a styrene resin may also be used.

The polyphenylene sulfide resin is a highly heat resistant crystalline polymer having a structure in which benzene and sulfur are alternately linked. The resin is often used as a mixture with a filler such as glass fibers, carbon fibers, silica and talc rather than is used as it is.

Examples of the polyvinyl chloride resin include vinyl chloride homopolymers and copolymers of vinyl chloride with an unsaturated monomer polymerizable therewith. Specific examples include vinyl chloride-acrylate ester copolymers, vinyl chloride-methacryl ester copolymers, vinyl chloride-ethylene copolymers, vinyl chloride-propylene copolymers, vinyl chloride-vinyl acetate copolymers, vinyl chloride-vinylidene chloride copolymers and the like. Products obtained by chlorination of the polyvinyl chloride resins may also be used in order to increase the chlorine content.

Examples of the polyacetal resin (POM) include polyoxymethylene homopolymers, formaldehyde-ethylene oxide copolymers obtained with trioxane and ethylene oxide and the like.

Examples of the acrylic resin include homopolymers and copolymers of a methacrylic ester and an acrylic ester, copolymers of the methacrylic ester or the acrylic ester with an unsaturated monomer copolymerizable therewith and the like. Examples of methacrylic ester and acrylic ester monomers include methyl, ethyl, n-propyl, isopropyl, butyl esters and the like of methacrylic acid and acrylic acid. Typically, methacrylic resins (PMMA) may be mentioned. The thermoplastic resins may be used independently or in combination of two or more.

Typical examples of the polyolefin resin include homopolymers and copolymers of an $\alpha$-olefin such as ethylene, propylene, butene-1, 3-methylbutene-1, 3-methylpentene-1 and 4-methylpentene-1, copolymers of an $\alpha$-olefin with an unsaturated monomer copolymerizable therewith and the like. Typical examples include polyethylenes including metallocene ethylene-$\alpha$-olefin copolymers such as high-density polyethylene, medium-density polyethylene, low-density polyethylene, linear low-density polyethylene, ultra-high-molecular-weight polyethylene, ethylene-vinyl acetate copolymers, ethylene-ethyl acrylate copolymers and ethylene-octene-1 copolymers; polypropylenes such as atactic polypropylene, syndiotactic polypropylene, isotactic polypropylene, propylene-ethylene block copolymers or random copolymers; polymethylpentene-1; and the like.

Another aspect of the carbon-fiber-reinforced resin composition of the present invention is a carbon fiber-reinforced thermosetting resin composition. The thermosetting resin may be, for example, at least one selected from the group consisting of an epoxy resin, a phenol resin, a melamine resin, a urea resin, a diallyl phthalate resin and an unsaturated polyester resin. The carbon fibers of the present invention has good dispersibility in water, and thus can provide wet-process nonwoven fabric, specifically thin carbon fiber sheets and carbon fiber paper by making paper therewith at an appropriate concentration. By mixing the resulting carbon fiber nonwoven fabric with a thermosetting resin prior to curing or allowing impregnation of the resin with the fabric followed by curing by heat and the like, a carbon fiber-reinforced thermosetting resin composition having unprecedented excellent mechanical characteristics can be obtained.

The carbon-fiber-reinforced resin composition of the present invention may also contain, according to the intended use thereof, a filler such as glass fibers, silica and talc, any of various flame retardants such as phosphorus compounds, bromine compounds, antimony compounds, metal oxides and nitrogen compounds in addition to the thermoplastic resin. Other than the additives above, the composition may contain appropriate amounts of various additives generally added to thermoplastic resin compositions such as a flow modifier of molten resins, an agent for improving moldability, a rubber-containing filler, an agent for improving impact resistance of thermoplastic elastomers and a delustering agent exhibiting a surface delustering effect.

Examples

The present invention is further specifically described by referring to Examples which exemplify the present invention without limitation.

Example 1

(I) Treatment of CFRP

A sample of CFRP of 20 to 40 mm long and around 10 mm wide was used to conduct decomposition of CFRP.

(1) Pretreatment;

As pretreatment, CFRP was subjected to heat treatment in air in a muffle furnace under the conditions indicated in Table 1-1, Table 1-2 and Table 1-3 (Comparative Example). For comparison, samples without heat treatment were included in Table 1-3. The samples after the heat treatment were examined for conductivity which is indicative of feasibility of electrolysis on a direct current tester.

(2) Electrochemical treatment;

CFRP after the heat treatment was packed in a plastic mesh basket with a diameter of 80 mm and height of 100 mm, placed on an anode side and completely immersed in 0.1 M NaOH or 0.1 M KOH electrolytic solution. The anode used was a carbon electrode and the cathode used was a cylindrical Cu electrode. When the electrolytic solution used was 0.1 M $H_2SO_4$, the cathode used was a Ti electrode. Anodization was conducted on the samples which had undergone different heat treatment conditions under electrolysis conditions indicated in Table 1-1 to Table 1-3. The interelectrode distance was 40 mm and voltage of 3 V to 12 V was applied from a stabilized direct current power supply.
The electrolytic solution after anodization was placed in a vessel equipped with agitating blades followed by high speed agitation to finely crush the embrittled epoxy resin. The resulting slurry was filtered through a stainless coarse mesh basket and repeatedly washed with water to remove the residual epoxy resin. The recovered carbon fibers in the mesh were neutralized and washed followed by drying at 150°C for 2 hours. The dry recovered carbon fibers were bound together in 0.1% polyvinyl alcohol aqueous solution, stacked by heating on a press, shredded and blended with a thermoplastic resin. It was already confirmed that polyvinyl alcohol used as a binder could provide bonding performance but did not contribute to the interface adhesion.
According to the equation below, the decomposition rate of the samples after anodization was determined. According to the Boehm titration method described hereinbelow, the amount of surface functional groups of dried samples before bonding was determined. Comparative Examples included some samples after heat treatment without anodization.

$$\text{Decomposition rate (\%)} = ((\text{weight of the untreated sample}) - (\text{weight of the treated sample})) / ((\text{weight ratio of epoxy resin}) \times (\text{weight of the untreated sample}))$$

The weight ratio of epoxy resin in denominator was 0.40.
Boehm titration method, which is a method for determination of the amount of functional groups on a carbon fiber surface, is described hereinbelow.

<Principle of Boehm titration method>

Sodium hydroxide (NaOH), which is a strongly basic solution, effects neutralization with any acidic functional groups. There is a difference in concentration of a basic solution before and after contact thereof with carbon fibers. Therefore, by calculating the change of concentration before and after the contact by neutralization titration, the total amount of acidic functional groups can be quantified.
To a sample, sodium hydroxide and sodium hydrogen carbonate are independently added and back titration using a hydrochloric acid solution is carried out (under an inert atmosphere) on an "automatic potentiometric titrator".

(1) Total amount of acidic functional groups (total acid amount): amount of the hydrochloric acid solution consumed under the conditions where sodium hydroxide is added.
(2) Amount of strongly acidic functional groups (carboxyl group amount): amount of the hydrochloric acid solution consumed under the conditions where sodium hydrogen carbonate is added.

(II) Results

Table 1-1 shows the results of the decomposition rate and the amount of surface functional groups for samples (sample Nos. 1 to 8) which were prepared under various heating temperatures except for 450°C in various types of electrolytic solutions. Table 1-2 shows the results of the decomposition rate and the amount of surface functional groups for samples (sample Nos. 13 to 21) which were prepared at a fixed heating temperature of 450°C under various electrolysis times in various types of electrolytic solutions. For comparison, the results under various conditions (samples 31 to 38) which are outside the range of the present invention are shown in Table 1-3 (Comparative Examples) which also includes, for comparison, untreated carbon fibers from Toray Industries, Inc., T300 and T700.

[Table 1-1]

| Sample No. | Heating conditions | | | Electrolysis conditions (25°C) | | | | Decomposition rate (%) | Surface functional group amount (mmol/g) | |
|---|---|---|---|---|---|---|---|---|---|---|
| | Heating temperature (°C) | Heating time (hr) | Conductivity (DC tester) | Electrolytic solution | Electrolysis time (hr) | Applied voltage (V) | Current density (A/m²) | | Total acid | Carboxylic group |
| 1 | 350 | 2 | Yes (conductive) | 0.1M H$_2$SO$_4$ | 3 | 4.0 | 0.46 | 88 | 0.31 | 0.034 |
| 2 | 400 | 1.5 | ← | ← | 3 | 4.0 | 0.41 | 90 | 0.33 | 0.039 |
| 3 | 400 | 2 | ← | ← | 3 | 4.0 | 0.38 | 93 | 0.38 | 0.043 |
| 4 | 420 | 0.5 | ← | 0.1M NaOH | 3 | 3.0 | 0.22 | 96 | 0.41 | 0.083 |
| 5 | 420 | 1 | ← | ← | 3 | 3.0 | 0.21 | 96 | 0.43 | 0.092 |
| 6 | 500 | 0.5 | ← | ← | 3 | 3.0 | 0.20 | 97 | 0.40 | 0.081 |
| 7 | 500 | 1 | ← | 0.1M KOH | 3 | 4.0 | 0.20 | 98 | 0.39 | 0.082 |
| 8 | 500 | 2 | ← | ← | 3 | 5.0 | 0.20 | 98 | 0.39 | 0.077 |
| 9 | 550 | 0.5 | ← | 0.1M NaOH | 3 | 3.0 | 0.40 | 98 | 0.38 | 0.076 |
| 10 | 550 | 1 | ← | ← | 3 | 4.0 | 0.50 | 98 | 0.36 | 0.074 |
| 11 | 600 | 0.5 | ← | ← | 3 | 3.0 | 0.50 | 99 | 0.37 | 0.070 |
| 12 | 600 | 1 | ← | ← | 3 | 5.0 | 0.55 | 99 | 0.35 | 0.066 |

[Table 1-2]

| Sample No. | Heating conditions | | | Electrolysis conditions (25°C) | | | | Decomposition rate (%) | Surface functional group amount (mmol/g) | |
|---|---|---|---|---|---|---|---|---|---|---|
| | Heating temperature (°C) | Heating time (hr) | Conductivity (DC tester) | Electrolytic solution | Electrolysis time (hr) | Applied voltage (V) | Current density (A/m$^2$) | | Total acid | Carboxylic group |
| 13 | 450 | 0.5 | Yes (conductive) | 0.1M NaOH | 0.5 | 4.5 | 0.21 | 96 | 0.360 | 0.038 |
| 14 | 450 | 0.5 | ↑ | ↑ | 1 | 4.5 | 0.30 | 97 | 0.380 | 0.045 |
| 15 | 450 | 0.5 | ↑ | ↑ | 2 | 4.5 | 0.35 | 97 | 0.410 | 0.082 |
| 16 | 450 | 0.5 | ↑ | ↑ | 3 | 4.5 | 0.21 | 97 | 0.420 | 0.108 |
| 17 | 450 | 0.5 | ↑ | ↑ | 5 | 4.5 | 0.21 | 97 | 0.406 | 0.071 |
| 18 | 450 | 1.5 | ↑ | 0.1M KOH | 2 | 3.0 | 0.40 | 97 | 0.400 | 0.068 |
| 19 | 450 | 1.5 | ↑ | ↑ | 4 | 3.0 | 0.45 | 97 | 0.390 | 0.053 |
| 20 | 450 | 3 | ↑ | 0.1 M H$_2$SO$_4$ | 3 | 5.0 | 0.40 | 97 | 0.380 | 0.048 |
| 21 | 450 | 5 | ↑ | 0.1M NaOH | 5 | 5.0 | 0.50 | 97 | 0.370 | 0.046 |

[Table 1-3]

| Sample No. | Heating conditions | | | Electrolysis conditions (25°C) | | | | Decomposition rate (%) | Surface functional group amount (mmol/g) | |
|---|---|---|---|---|---|---|---|---|---|---|
| | Heating temperature (°C) | Heating time (hr) | Conductivity (DC tester) | Electrolytic solution | Electrolysis time (hr) | Applied voltage (V) | Current density (A/m$^2$) | | Total acid | Carboxylic group |
| 31 | Untreated | 0 | Non (not conductive) | 0.1M $H_2SO_4$ | 3 | 12.0 | 0.00 | 0 | 0.01 | N.D. |
| 32 | 300 | 1 | moderate (slightly conductive) | ↑ | 3 | 12.0 | 0.92 | 14 | 0.08 | 0.001 |
| 33 | 350 | 0.5 | ↑ | ↑ | 3 | 12.0 | 0.83 | 35 | 0.03 | 0.003 |
| 34 | 350 | 1 | ↑ | ↑ | 3 | 12.0 | 0.79 | 40 | 0.11 | 0.006 |
| 35 | 400 | 0.5 | Yes (conductive) | ↑ | 3 | 12.0 | 0.61 | 72 | 0.14 | 0.011 |
| 36 | 400 | 1 | ↑ | ↑ | 3 | 12.0 | 0.58 | 78 | 0.23 | 0.019 |
| 37 | 450 | 1 | ↑ | None | - | - | - | 66 | 0.12 | 0.001 |
| 38 | 500 | 2 | ↑ | ↑ | - | - | - | 81 | 0.15 | 0.002 |
| Toray T300 | | - | - | - | - | - | - | - | 0.24 | 0.001 |
| Toray T700 | | - | - | - | - | - | - | - | 0.21 | 0.001 |

In all samples indicated in Table 1-1 and Table 1-2, the amount of surface functional groups recited in claim 1 of the present invention could be achieved. In addition, high decomposition rates (carbon fiber recovery rates) as high as 88% or more could be achieved.

In Table 1-3 (Comparative Examples), sample Nos. 32 to 36 prepared under the conditions of heat treatment temperature, applied voltage and average current outside the ranges of the present invention had the amounts of surface functional groups outside the range of the present invention. In addition, the sample No. 31 underwent insufficient heat treatment, and thus did not have conductivity required for anodization and no carbon fiber sample could be isolated or recovered. Sample Nos. 37 and 38 which underwent only the heat treatment without electrolytic treatment did not have the amount of surface functional groups within the predetermined range of the present invention. T300 and T700 manufactured by Toray Industries, Inc. also had lower amounts of surface functional groups than the predetermined range of the present invention, and were also selected for examination of mechanical properties in Example 2, Table 2-2.

Example 2

(I) Preparation of thermoplastic resin compositions

Samples were appropriately selected from those indicated in Table 1-1 to Table 1-3 (Comparative Example 1) and used for preparation of compositions with thermoplastic resins.

As to the preparation method, 10 to 30 mass% of bound recovered carbon fibers relative to 70 to 90 mass% of thermoplastic resin were respectively weighed and both materials were subjected to extrusion and kneading on a twin-screw extruder ZE40A manufactured by KraussMaffei Group GmbH, Germany under the temperature condition of a melting temperature of the thermoplastic resin. Recycled carbon fibers which were added in large amounts were side-fed at the middle of the extruder screw. Sample used was a bound sample with about 1 to 3 cm long and other carbon fiber samples used also had a fiber length of 1 to 3 cm.

The resulting pellets were subjected to injection molding on F85 injection molding machine manufactured by Klockner under optimal molding conditions for each thermoplastic resin to prepare a test specimen for various mechanical measurements.

The results of mechanical properties of the respective thermoplastic resin compositions are indicated in the following tables. Table 2-1 shows mechanical properties of thermoplastic resin compositions of carbon fibers in Table 1-1 and Table 1-2 with an ABS resin, 66 nylon resin or a PBT resin. Table 2-2 shows the results of mechanical properties of compositions containing thermoplastic resins other than ABS, 66 nylon and PBT. Preparation conditions of carbon fibers used are indicated on the left halves of the tables from which the conductivity, the type of electrolytic solution and the decomposition rate are omitted.

[Table 2-1]

| Sample No. | Classification | Resin | CF sample No. | CF amount added (mass%) | Tensile fracture strength (Mpa) | Flexural strength (Mpa) | Flexural modulus (Mpa) | Carbon fibers used | | | | | | |
|---|---|---|---|---|---|---|---|---|---|---|---|---|---|---|
| | | | | | | | | Surface functional group amount (mmol/g) | | Heating prior to electrolysis | | Anodization | | |
| | | | | | | | | Total acid | Carboxyl group | Temperature (°C) | Time (hr) | Time (hr) | Applied voltage (V) | Current density (A/m$^2$) |
| 101 | Example | ABS | 14 | 20 | 121 | 160 | 11,500 | 0.38 | 0.045 | 450 | 0.5 | 1 | 4.5 | 0.30 |
| 102 | Example | ABS | 16 | 20 | 123 | 168 | 11,700 | 0.42 | 0.108 | 450 | 0.5 | 3 | 4.5 | 0.21 |
| 103 | Example | ABS | 19 | 20 | 126 | 162 | 11,600 | 0.39 | 0.053 | 450 | 1.5 | 4 | 3.0 | 0.45 |
| 104 | Example | ABS | 21 | 20 | 123 | 161 | 11,600 | 0.37 | 0.046 | 450 | 5 | 5 | 5.0 | 0.50 |
| 105 | Comp. Ex. | ABS | 32 | 20 | 79 | 90 | 6,500 | 0.08 | 0.001 | 300 | 1 | 3 | 12.0 | 0.92 |
| 106 | Comp. Ex. | ABS | 34 | 20 | 82 | 97 | 7,800 | 0.11 | 0.006 | 350 | 1 | 3 | 12.0 | 0.79 |
| 107 | Comp. Ex. | ABS | 36 | 20 | 99 | 122 | 10,200 | 0.23 | 0.019 | 400 | 1 | 3 | 12.0 | 0.58 |
| 108 | Comp. Ex. | ABS | Toray T300 | 20 | 109 | 138 | 10,300 | 0.24 | 0.001 | - | - | - | - | - |
| 109 | Example | 66 nylon | 4 | 20 | 230 | 332 | 14,000 | 0.41 | 0.083 | 420 | 0.5 | 3 | 3.0 | 0.22 |
| 110 | Example | 66 nylon | 7 | 20 | 228 | 331 | 14,000 | 0.39 | 0.082 | 500 | 1 | 3 | 4.0 | 0.20 |
| 111 | Example | 66 nylon | 9 | 30 | 264 | 368 | 19,900 | 0.38 | 0.076 | 550 | 0.5 | 3 | 3.0 | 0.40 |
| 112 | Example | 66 nylon | 12 | 30 | 262 | 360 | 19,800 | 0.35 | 0.066 | 600 | 1 | 3 | 5.0 | 0.55 |
| 113 | Comp. Ex. | 66 nylon | 33 | 20 | 119 | 159 | 8,000 | 0.03 | 0.003 | 350 | 0.5 | 3 | 12.0 | 0.83 |
| 114 | Comp. Ex. | 66 nylon | Toray T300 | 20 | 223 | 310 | 13,800 | 0.24 | 0.001 | - | - | - | - | - |
| 115 | Comp. Ex. | 66 nylon | 35 | 30 | 130 | 221 | 10,100 | 0.14 | 0.011 | 400 | 0.5 | 3 | 12.0 | 0.61 |
| 116 | Comp. Ex. | 66 nylon | Toray T700 | 30 | 246 | 340 | 19,200 | 0.21 | 0.001 | - | - | - | - | - |
| 117 | Example | PBT | 1 | 20 | 123 | 174 | 11,900 | 0.31 | 0.034 | 350 | 2 | 3 | 4.0 | 0.46 |
| 118 | Example | PBT | 2 | 30 | 170 | 264 | 18,200 | 0.33 | 0.039 | 400 | 1.5 | 3 | 4.0 | 0.41 |

EP 3 239 391 B1

(continued)

| Sample No. | Classification | Resin | CF sample No. | CF amount added (mass%) | Tensile fracture strength (Mpa) | Flexural strength (Mpa) | Flexural modulus (Mpa) | Carbon fibers used | | | | | | |
|---|---|---|---|---|---|---|---|---|---|---|---|---|---|---|
| | | | | | | | | Surface functional group amount (mmol/g) | | Heating prior to electrolysis | | Anodization | | |
| | | | | | | | | Total acid | Carboxyl group | Temperature (°C) | Time (hr) | Time (hr) | Applied voltage (V) | Current density (A/m$^2$) |
| 119 | Comp. Ex. | PBT | 37 | 20 | 88 | 103 | 7,400 | 0.12 | 0.001 | 450 | 1 | - | - | - |
| 120 | Comp. Ex. | PBT | Toray T300 | 20 | 114 | 161 | 10,800 | 0.24 | 0.001 | - | - | - | - | - |
| 121 | Comp. Ex. | PBT | 38 | 30 | 101 | 142 | 9,500 | 0.15 | 0.002 | 500 | 2 | - | - | - |
| 122 | Comp. Ex. | PBT | Toray T700 | 30 | 160 | 242 | 17,300 | 0.21 | 0.001 | - | - | - | - | - |

[Table 2-2]

| Sample No. | Classification | Resin | CF sample No. | CF amount added (mass%) | Tensile fracture strength (Mpa) | Flexural strength (Mpa) | Flexural modulus (Mpa) | Carbon fibers used | | | | | | |
|---|---|---|---|---|---|---|---|---|---|---|---|---|---|---|
| | | | | | | | | Surfacefunctional group amount (mmol/g) | | Heating prior to electrolysis | | Anodization | | |
| | | | | | | | | Total acid | Carboxyl group | Temperature (°C) | Time (hr) | Time (hr) | Applied voltage (V) | Current density (A/m²) |
| 123 | Example | Polycarbonate (PC) flame-retardant | 15 | 10 | - | 118 | 5,900 | 0.41 | 0.082 | 450 | 0.5 | 2 | 4.5 | 0.35 |
| 124 | Comp. Ex. | Polycarbonate (PC) flame-retardant | - | 0 | - | 93 | 2,300 | - | - | - | - | - | - | - |
| 125 | Example | Polyphenylene sulfide (PPS) | 17 | 10 | 149 | 220 | 10,400 | 0.41 | 0.071 | 450 | 0.5 | 5 | 4.5 | 0.21 |
| 126 | Comp. Ex. | Polyphenylene sulfide (PPS) | - | 0 | 85 | 140 | 3,900 | - | - | - | - | - | - | - |
| 127 | Example | Polyphenylene ether (PPE) | 18 | 20 | - | 220 | 10,400 | 0.40 | 0.068 | 450 | 1.5 | 2 | 3.0 | 0.40 |
| 128 | Comp. Ex. | Polyphenylene ether (PPE) | - | 0 | - | 110 | 2,600 | - | - | - | - | - | - | - |
| 129 | Example | Polypropylene (PP) | 20 | 20 | - | 181 | 10,500 | 0.38 | 0.048 | 450 | 3 | 3 | 5.0 | 0.40 |
| 130 | Comp. Ex. | Polypropylene (PP) | - | 0 | - | 55 | 2,000 | - | - | - | - | - | - | - |
| 131 | Example | Polyoxymethylene (polyacetal) | 3 | 5 | - | 129 | 7,400 | 0.38 | 0.043 | 400 | 2 | 3 | 4.0 | 0.38 |
| 132 | Comp. Ex. | Polyoxymethylene (polyacetal) | - | 0 | - | 90 | 2,600 | - | - | - | - | - | - | - |
| 133 | Example | Vinyl chloride | 5 | 20 | 106 | 185 | 11,800 | 0.43 | 0.092 | 420 | 1 | 3 | 3.0 | 0.21 |
| 134 | Comp. Ex. | Vinyl chloride | - | 0 | 59 | 90 | 2,800 | - | - | - | - | - | - | - |
| 135 | Example | Acrylic resin | 10 | 10 | 119 | 200 | 9,300 | 0.36 | 0.074 | 550 | 1 | 3 | 4.0 | 0.50 |
| 136 | Comp. Ex. | Acrylic resin | - | 0 | 71 | 130 | 3,300 | - | - | - | - | - | - | - |

The thermoplastic resin compositions in Table 2-1 which contained carbon fibers having properties recited in claim 1 of the present invention or carbon fibers prepared according to the method fulfilling the preparation conditions of the present disclosure exhibit increased mechanical properties (tensile strength and flexural strength and flexural modulus) compared to the carbon fiber thermoplastic resins indicated as Comparative Examples in Table 2-2 and have significantly improved mechanical strength from that of thermoplastic resins without carbon fibers, and thus the carbon fibers sufficiently exhibit the reinforcing effect.

Further, for ABS resin (sample Nos. 101 to 104), nylon 66 resin (sample No 109 to 112) and PBT resin (sample No 117 to 118), the thermoplastic resin compositions of the present invention have superior mechanical strength relative to the samples (sample No.108 for ABS resin, sample Nos. 114 and 116 for nylon 66 resin and sample Nos 210 and 212 for PBT resin) in which the corresponding levels of commercially available virgin carbon fibers manufactured by Toray Industries, Inc. were added, and thus it is believed that the carbon fibers of the present disclosure exhibit a superior reinforcing effect to virgin carbon fibers.

The thermoplastic resin compositions of Comparative Examples which contained carbon fibers at a level outside the range of the present invention had significantly lower mechanical strength than the samples of Examples and had significantly lower mechanical strength than the samples containing the carbon fibers manufactured by Toray Industries, Inc.

The sample Nos.105 to 107 had the heating temperature condition, the applied voltage and the average current outside the ranges of the invention and, as a result, had the amount of surface functional groups outside the range of the present invention, and had significantly lower reinforcing effect than the sample (No.108) containing the carbon fibers manufactured by Toray Industries, Inc., although the samples had improved mechanical strength than the ABS resin without carbon fibers added. Therefore, it is judged that the samples are impractical.

The sample Nos.119 and 121 containing carbon fibers which underwent only heat treatment without anodization had the amount of surface functional groups outside the predetermined range of the present invention and had lower mechanical strength than the samples (Nos.120 and 122) containing carbon fibers manufactured by Toray Industries, Inc., and thus it is judged that the samples are impractical.

It is believed that the thermoplastic resin compositions containing carbon fibers of the present disclosure exhibited such high mechanical strength because the carbon fibers of the present invention have good dispersibility in thermoplastic resins which are matrix resins, thereby increasing the strength of the thermoplastic resins.

Generally, carbon fibers have less surface functional groups and thus have less dispersibility and compatibility in matrix resins, and compounds having functional groups in the molecular structures thereof and having binding property have been used as a sizing agent (also referred to as a binder) for carbon fibers. Carbon fibers called T300 and T700 available from Toray Industries, Inc. which contain a sizing agent have the amount of surface functional groups outside the range of the present invention, thereby having lower mechanical strength than the thermoplastic resin compositions obtained according to the present invention. Meanwhile, according to the present invention, CFRP was subjected to carbonization treatment as pretreatment of anodization followed by anodization, thereby allowing provision of recycled carbon having the amount of surface functional groups higher than those containing well-known sizing agents, and, with the use of the recycled carbon, provision of thermoplastic resin compositions having mechanical properties superior to the thermoplastic resin compositions containing conventional short fibers.

Example 3

CF sample Nos. 16 and 34 were selected from those indicated in Table 1-1 to Table 1-3 (Comparative Example 1) to prepare nonwoven fabric by a papermaking method followed by preparation of compositions with a thermoplastic resin or a thermosetting resin.

(I) Preparation of carbon fiber nonwoven fabric

The present carbon fibers (average fiber length: 10 mm) indicated in Table 1-1 are dispersed in water to prepare a slurry for papermaking having a solid content of 0.1 to 3.0%. Thereafter, 0.00002 parts by weight of anionic sodium polyacrylate serving as a dispersant was added and the carbon fiber dispersion was sedimented on a papermaking surface of a manual papermaking machine having a mesh size of 0.3 mm to obtain a sheet of paper. With regard to a composition containing the resulting nonwoven fabric and a thermoplastic resin, thermoplastic resin fibers having a similar fiber length as the carbon fibers were preliminarily mixed with the present carbon fibers and used for papermaking (mixed papermaking).

(II) Preparation of resin composition (carbon fiber-reinforced composite material sheet)

To a wet sheet of paper prepared in the papermaking step was added 1 part by weight of binding agent, urethane emulsion (E-2000 manufactured by DKS Co., Ltd.), pressed and heated (heating under pressure) and dehydrated to obtain a fiber base.

With regard to the nonwoven fabric obtained by mix papermaking with thermoplastic resin fibers, the binding agent was omitted and a resin composition sheet was obtained only by pressing and heating (heating under pressure) at 5 MPa and 200°C. With regard to the composition sheet containing the thermosetting resin, the fiber base was impregnated with the thermosetting resin in the form of liquid or the form allowing impregnation such as a solution of the resin in a solvent including methyl ethyl ketone, and the resin composition was obtained by stacking 10 bases and pressing and heating at 5 MPa and 130°C.

With regard to the resin compositions obtained with the carbon fiber nonwoven fabric, the result of measurement of flexural strength according to JIS K7074 (3-point flexure) are shown in Table 3-1 (Examples) and Table 3-2 (Comparative Examples). According to Table 3-1, the carbon fibers of the present disclosure in the form of the composite material composition with the carbon fiber sheet prepared by papermaking method exhibited good mechanical properties and sample No. 302 exhibited good mechanical properties even in the form of the thermosetting resin composition. On the other hand, the resin compositions indicated in Table 3-2 (Comparative Examples) containing carbon fibers outside the scope of the present invention had lower mechanical strength than the samples indicated in Table 3-1.

[Table 3-1]

| Sample No. | Carbon fibers used | | | | | | | | Stacked sheet aspect | | Resin composition mechanical properties | | | | |
|---|---|---|---|---|---|---|---|---|---|---|---|---|---|---|---|
| | CF sample No. | Heating | | Anodization | | | Surface functional group amount (mmol/g) | | Basis weight (g/m$^2$) | Thickness (mm) | Base polymer | CF content (%) | Specific gravity | Flexural strength (Mpa) | Flexural modulus (Mpa) |
| | | Temperature (°C) | Time (hr) | Time (hr) | Applied voltage (V) | Average current (A) | Total acid | Carboxyl group | | | | | | | |
| 301 | 16 | 450 | 0.5 | 3 | 4.5 | 0.21 | 0.420 | 0.108 | 1900 | 1.85 | PP | 50 | 1.34 | 220 | 20,000 |
| 302 | 16 | 450 | 0.5 | 3 | 4.5 | 0.21 | 0.420 | 0.108 | 1520 | 1.51 | Thermosetting epoxy resin | 50 | 1.34 | 190 | 18,500 |

[Table 3-2]

| Sample No. | Carbon fibers used | | | | | | | | Sheet aspect | | Resin composition mechanical properties | | | | |
|---|---|---|---|---|---|---|---|---|---|---|---|---|---|---|---|
| | CF sample No. | Heating | | Anodization | | | Surface functional group amount (mmol/g) | | Basis weight (g/m$^2$) | Weighing | Base polymer | CF content (%) | Specific gravity | Flexural strength (Mpa) | Flexural modulu s (Mpa) |
| | | Temperature (°C) | Time (hr) | Time (hr) | Applied voltage (V) | Average current (A) | Total acid | Carboxyl group | | | | | | | |
| 311 | 34 | 350 | 1 | 3 | 12 | 0.79 | 0.11 | 0.006 | 1920 | 1.85 | PP | 50 | 1.34 | 170 | 17,000 |
| 312 | 34 | 350 | 1 | 3 | 12 | 0.79 | 0.11 | 0.006 | 1550 | 1.52 | Thermosetting epoxy resin | 50 | 1.34 | 160 | 14,500 |

[Industrial Applicability]

The present invention is useful in technical fields related to carbon-fiber-reinforced composite materials.

**Claims**

1. A carbon-fiber-reinforced resin composition comprising (A) a carbon fiber not containing a sizing agent and exhibiting 0.3 mmol/g or more of total amount of acidic functional groups on a carbon fiber surface measured by Boehm titration method or 0.02 mmol/g or more of amount of carboxyl groups on a carbon fiber surface measured by Boehm titration method and (B) a thermoplastic resin and/or a thermosetting resin;
   wherein the resin composition comprises 5 to 95 mass% of (A) a carbon fiber and 5 to 95 mass% of (B) a thermoplastic resin and/or a thermosetting resin on the basis of a total amount of (A) the carbon fiber and (B) the thermoplastic resin and/or a thermosetting resin as 100 mass%.

2. The carbon-fiber-reinforced resin composition according to claim 1, wherein the thermoplastic resin is at least one selected from the group consisting of a styrene resin, a polyamide resin, a polycarbonate resin, a polyester resin, a polyphenylene ether resin, a polyphenylene sulfide resin, a polyacetal resin, an acrylic resin, a vinyl chloride resin and a polyolefin resin.

3. The carbon-fiber-reinforced resin composition according to claim 1, wherein the thermosetting resin is at least one selected from the group consisting of an epoxy resin, a phenol resin, a melamine resin, a urea resin, a diallyl phthalate resin and an unsaturated polyester resin.

**Patentansprüche**

1. Kohlenstofffaserverstärkte Harzzusammensetzung, enthaltend (A) eine Kohlenstofffaser, die kein Schlichtemittel enthält und eine Gesamtmenge an sauren funktionellen Gruppen auf der Kohlenstofffaseroberfläche, gemessen nach dem Boehm-Titrationsverfahren, von 0,3 mmol/g oder mehr oder eine Menge an Carboxylgruppen auf der Kohlenstofffaseroberfläche, gemessen nach dem Boehm-Titrationsverfahren, von 0,02 mmol/g oder mehr aufweist, und (B) ein thermoplastisches Harz und/oder ein duroplastisches Harz;
   wobei die Harzzusammensetzung 5 bis 95 Massen-% von (A) einer Kohlenstofffaser und 5 bis 95 Massen-% von (B) eines thermoplastischen Harzes und/oder eines duroplastischen Harzes, auf der Basis einer Gesamtmenge von (A) der Kohlenstofffaser und (B) des thermoplastischen Harzes und/oder duroplastischen Harzes als 100 Massen-%, enthält.

2. Kohlenstofffaserverstärkte Harzzusammensetzung nach Anspruch 1, worin das thermoplastische Harz wenigstens ein unter einem Styrolharz, einem Polyamidharz, einem Polycarbonatharz, einem Polyesterharz, einem Polyphenylenetherharz, einem Polyphenylensulfidharz, einem Polyacetalharz, einem Acrylharz, einem Vinylchloridharz und einem Polyolefinharz ausgewähltes Harz ist.

3. Kohlenstofffaserverstärkte Harzzusammensetzung nach Anspruch 1, worin das duroplastische Harz wenigstens ein unter einem Epoxidharz, einem Phenolharz, einem Melaminharz, einem Harnstoffharz, einem Diallylphthalatharz und einem ungesättigten Polyesterharz ausgewähltes Harz ist.

**Revendications**

1. Composition de résine renforcée de fibres de carbone comprenant (A) une fibre de carbone ne contenant pas de produit d'encollage et présentant 0,3 mmol/g ou plus de quantité totale de groupes fonctionnels acides sur une surface de fibre de carbone mesurée par procédé de titrage de Boehm ou 0,02 mmol/g ou plus de quantité de groupes carboxyles sur une surface de fibre de carbone mesurée par procédé de titrage de Boehm et (B) une résine thermoplastique et/ou une résine thermodurcissable ;
   dans laquelle la composition de résine comprend 5 à 95 % en masse de (A) une fibre de carbone et 5 à 95 % en masse de (B) une résine thermoplastique et/ou une résine thermodurcissable sur la base d'une quantité totale de (A) la fibre de carbone et (B) la résine thermoplastique et/ou une résine thermodurcissable étant de 100 % en masse.

**2.** Composition de résine renforcée de fibres de carbone selon la revendication 1, dans laquelle la résine thermoplastique est au moins une choisie dans le groupe constitué d'une résine de styrène, d'une résine de polyamide, d'une résine de polycarbonate, d'une résine de polyester, d'une résine d'éther de polyphénylène, d'une résine de sulfure de polyphénylène, d'une résine de polyacétal, d'une résine acrylique, d'une résine de chlorure de vinyle et d'une résine de polyoléfine.

**3.** Composition de résine renforcée de fibres de carbone selon la revendication 1, dans laquelle la résine thermodurcissable est au moins une choisie dans le groupe constitué d'une résine époxy, d'une résine de phénol, d'une résine de mélamine, d'une résine d'urée, d'une résine de phtalate de diallyle et d'une résine de polyester insaturé.

## Fig.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013249386 A
- US 5462799 A
- US 4401533 A
- GB 2159178 A
- JP H11930078 A
- JP H07279040 A
- JP H06298993 B
- JP 2005255899 A
- JP H04361619 B
- JP 20131638889 B